# FASCICULE DE BREVET EUROPEEN

(11) **EP 3 209 995 B1**
(45) Date de publication et mention de la délivrance du brevet: **19.08.2020**
(21) Numéro de dépôt: 15797125.0
(22) Date de dépôt: 23.10.2015
(51) Int. Cl.: G01M 17/08

(54) **BANC DYNAMIQUE POUR TESTER UNE RAME, NOTAMMENT UNE RAME DE MÉTRO AUTOMATIQUE, ÉQUIPÉ D'UN ARBRE ÉLECTRIQUE**
DYNAMISCHER PRÜFSTAND ZUM PRÜFEN EINES ZUGVERBAND, INSBESONDERE EINES AUTOMATISCHEN U-BAHNZUGVERBANDS, MIT EINER ELEKTRISCHEN WELLE
DYNAMIC TEST BENCH FOR TESTING A TRAIN SET, IN PARTICULAR AN AUTOMATIC SUBWAY TRAIN SET, EQUIPPED WITH AN ELECTRIC SHAFT

(30) Priorité: 23.10.2014 FR 1460213
(43) Date de publication de la demande: 30.08.2017
(73) Titulaire: Spherea Test & Services, 31772 Colomiers Cedex (FR); Sereme, 91070 Bondoufle (FR)
(72) Inventeur: DECOBERT, François, F-77250 Moret Sur Loing (FR); TERTRE, Dominique, F-78110 Le Vesinet (FR)
(74) Mandataire: Ipside
(86) Numéro de dépôt international: PCT/FR2015/052865
(87) Numéro de publication internationale: WO 2016/062981

(56) Documents cités:
- WO-A2-2009/073697
- CN-U- 202 305 185
- ES-A1- 2 398 798
- US-A- 5 101 660
- US-A- 5 154 076

## Description

La présente invention se rapporte à un banc de tests pour un métro, notamment un métro automatique. En particulier, l'invention concerne un banc d'essais pour du matériel en service, qui est prévu pour accueillir des passagers, une fois les vérifications faites.

Actuellement, des essais de rames de métro ou plus généralement de trains, sont effectuées sur des voies d'essais. Une telle voie d'essais peut occuper plusieurs milliers de mètres carrés ; une telle surface n'est pas toujours disponible pour implanter une voie d'essais et si elle l'est, elle peut avantageusement être affectée à d'autres utilisations.

Le document ES2398798 décrit un système pour tester une voiture de véhicules ferroviaires en utilisant des unités de roulement comportant chacun une masse inertielle, un moteur, un capteur de vitesse et qui sont placées sous les essieux du véhicule. Le document CN202305185U décrit un système similaire pour tester des essieux de véhicules ferroviaires.

L'invention a pour but de proposer un banc qui réponde aux besoins auxquels répond généralement une voie d'essais, sans la contrainte de son encombrement. Ainsi, un tel banc doit simuler la voie d'essais dans un espace limité. Il doit notamment simuler :
- Le déplacement : La rame doit se mettre en condition opérationnelle de déplacement, les moteurs de la rame vont entrainer les roues.
- L'inertie du train : Lorsque la rame accélère ou décélère, elle déplace son propre poids ce qui génère un couple sur les roues.
- La communication avec la rame : afin que le train se déplace, il reçoit et transmet des informations par l'intermédiaire d'antennes localisées dans le 'tapis' de la voie.
- L'interface opérateur.

Le banc doit permettre de reproduire l'ensemble des tests habituellement effectués en voie d'essais :
- Essais des fonctions de traction, de freinage, de pilotage de la rame,
- Contrôles du respect des consignes de vitesse,
- Essais de mise en mouvement de la rame, d'arrêt en station et de communication avec les équipements de la station,
- Contrôles des sécurités du véhicule (fréquence de sécurité, anti collision, détection d'obstacles, fonction EVAC...)
- Contrôles du fonctionnement du freinage électrique,
- Reproduction d'une circulation,
- Essais des fonctions de maintenance et de service de la rame (rodage plaquette, liaisons phonie et interphonie, états des équipements).

L'invention propose un banc pour tester une rame, notamment une rame de métro automatique, selon la revendication 1.

Avantageusement, les moyens de pilotage comprennent des moyens pour assurer que les corrections commandées aux deux moteurs sont globalement d'énergie nulle.

Les moyens de pilotages peuvent aussi être adaptés pour fournir une consigne de couple pour :
- simuler une rame ayant une inertie un peu différente ; et/ou,
- simuler une pente : et/ou,
- compenser des frottements internes au banc.

D'autres caractéristiques et avantages de l'invention apparaîtront à la lecture de la description détaillée de plusieurs modes d'exécution de l'invention donnés à titre d'exemples non limitatifs, en référence aux dessins annexés dans lesquels :
- la figure 1 est une vue en perspective de trois-quarts arrière, principalement de la partie mécanique d'un banc selon l'invention et d'une rame sur ce banc ;
- la figure 2 est une représentation schématique, illustrant le banc de la figure 1, y compris son infrastructure système ;
- la figure 3 est une vue en perspective de trois-quarts arrière d'une unité de roulement pour le banc de la figure 1 ;
- la figure 4 illustre schématiquement des moyens de communication de la rame avec son infrastructure système ;
- la figure 5 illustre schématiquement une antenne FS telle qu'il en existe sur une voie d'exploitation ;
- la figure 6 illustre schématiquement le fonctionnement de l'antenne de la figure 5 ;
- la figure 7 illustre schématiquement une simulation du fonctionnement de l'antenne de la figure 5, tel que mis en œuvre sur le banc de la figure 1
- la figure 8 illustre la composition d'une antenne pour le banc de la figure 1 suivant le principe de la figure 8 ;
- la figure 9 illustre un simulateur de plot ; et,

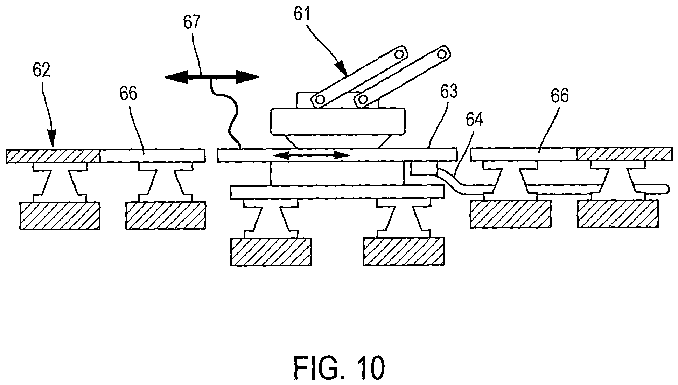

- la figure 10 illustre la simulation d'une alimentation de la rame par frotteur.

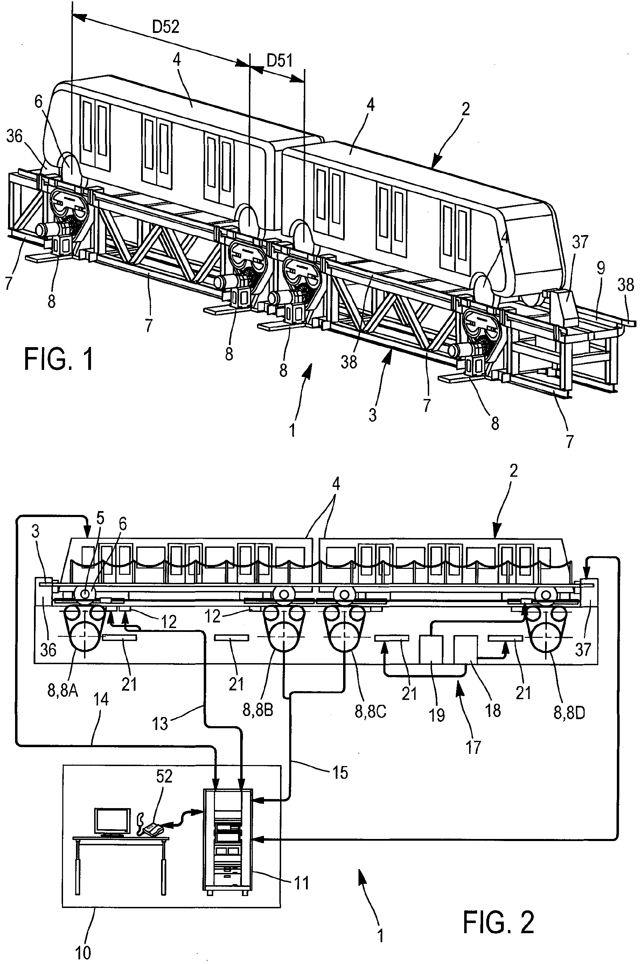

La figure 1 illustre un banc de test 1, prévu pour tester une rame de métro automatique 2. Seule une partie du banc 1, formant un ensemble mécanique 3 aussi appelé banc inertiel, est illustrée à la figure 1. La rame 2 comprend deux voitures 4 comprenant chacune deux essieux 5, chaque essieu étant au voisinage d'une extrémité respective de la voiture, et, chaque essieu portant deux roues 6. Dans l'exemple illustré, les roues sont équipées de pneus.

L'ensemble mécanique 3 est en charge de la tenue mécanique de la rame sous test, ainsi que de la transmission et la récupération des efforts transmis par la rame 2 (traction/freinage). Une unité de roulement 8 est placée sous chaque essieu 5 de la rame 2. Des châssis 7, formés d'un treillis de poutrelles métalliques, sont disposés de part et d'autres des unités de roulement. Les châssis 7 forment ensemble une structure porteuse 7-7 pour une piste de roulement 9. Cette piste 9 permet la circulation de la rame 2 lors de sa mise en place sur le banc 1. La partie mécanique est de préférence disposée dans une fosse, non représentée aux figures, de sorte que la piste de roulement 9 du banc soit de niveau avec une voie d'accès au banc.

Comme illustré à la figure 2, le banc 1 comprend en outre une unité de commande 10, permettant le contrôle et la commande du banc 1 par un opérateur. Cette unité 10 est composée d'une baie informatique 11 comprenant les cartes d'entrée/sortie, ainsi que des moyens de pilotage, notamment une unité de calcul en temps réel et une unité dédiée à l'interface Homme-Machine. Une interface graphique de l'unité de commande permet à l'opérateur un accès à l'ensemble des paramètres du banc 1.

Le banc 1 comprend en outre des moyens pour communiquer avec la rame 2, notamment :
- des antennes 12 compatibles avec celles utilisées par la rame, et reliées par des « liaisons antennes » 13 à l'unité de commande 10 ;
- des connecteurs d'attelage (connexion « ligne de train »),
- une connexion « phonie » 14,
- divers capteurs 15 (capteur de collision, vitesse essieux, etc...)

Le banc 1 comprend aussi des moyens électriques 17, notamment :
- une distribution basse tension 18,
- une distribution Puissance Traction 19, incluant une «liaison frotteur» vers la rame 2,
- une signalisation du banc 1,
- un éclairage 21 du banc 1.

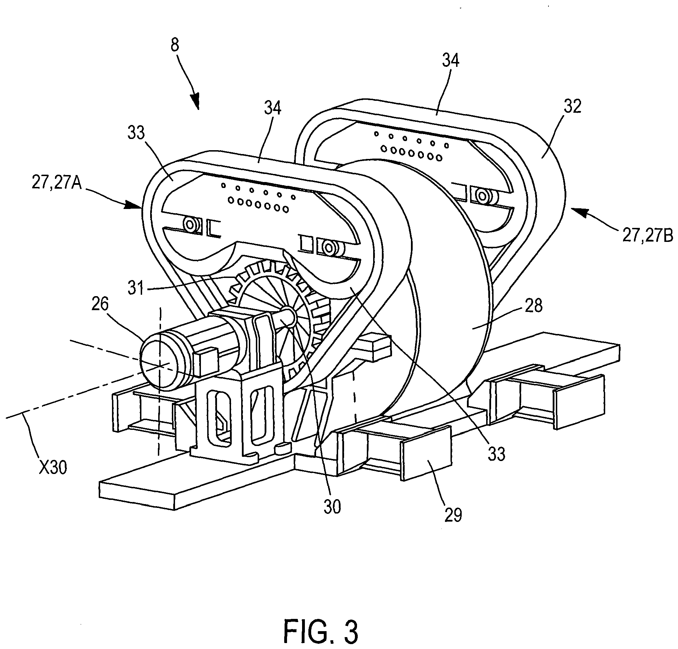

On va maintenant décrire une unité de roulement, en référence à la figure 3. Le banc 1 comprend quatre unités de roulement 8, disposées de sorte qu'un essieu 5 respectif repose sur chaque unité 8. Les unités de roulement sont sensiblement identiques entre elles.

Chaque unité comprend notamment :
- un moteur, ici un motoréducteur, électrique 26 ;
- deux tapis 27, sensiblement identiques entre eux ;
- une masse inertielle 28 cylindrique ; et,
- un châssis 29, qui porte ces éléments 26-28.

Le moteur 26 est en prise avec un arbre 30 horizontal, d'axe X30 transversal à la piste de roulement 9. Sur cet arbre sont disposés :
- à une première extrémité de l'arbre, le moteur 26 ;
puis, en direction de la deuxième extrémité de l'arbre 30 :
- une première roue d'entrainement 31, pour un premier des tapis 27A ;
- la masse inertielle 28 ; et,
- une première roue d'entrainement, pour le deuxième tapis 27B.

Chaque tapis comprend une bande de roulement 32. Cette bande 32 est tendue sur deux rouleaux 33 respectifs et en prise sur une des roue d'entrainement 31. Les rouleaux sont sensiblement identiques entre eux, tournant librement sur leur axe respectif, ces axes sont horizontaux et coplanaires. La roue d'entrainement est disposée plus bas que les rouleaux ; elle transmet les mouvements de la bande 32 à l'arbre 30 et à la masse inertielle 28.

Dans l'exemple illustré, les roues d'entrainement sont des pignons 31 et la bande de roulement 32 est une bande crantée engrenée avec un pignon 31 respectif.

Une zone de roulement 34 est formée par la bande 32 dans sa partie supérieure située entre les rouleaux 33. Cette zone de roulement 34 est sensiblement plane et horizontale, elle est disposée dans le prolongement de la piste 9 portée par les châssis 7. En outre, cette zone 34 est disposée pour se déplacer selon une direction longitudinale, définie par la direction longitudinale de la piste 9.

La zone de roulement 34 est prévue pour qu'une roue respective 6 de la rame 2 y repose. La bande 32 est entrainée en mouvement par le roulement de la roue 6 sur la zone de roulement 34. Des moyens de maintien, non représentés, disposés sous cette zone, permettent de limiter la déformation de la zone de roulement sous le poids de la rame, partiellement transmis par la roue 6. Grâce à la planéité de la zone 34, la déformation du pneu est sensiblement identique à ce qu'elle est sur une voie d'exploitation. La longueur de la zone de roulement est choisie suffisamment longue pour permettre un déplacement longitudinal des essieux lors des essais. Il n'y a sensiblement pas de déplacement vertical ; les différences de niveau entre la zone de roulement 34 et la piste 9, qui pourrait poser un problème lors de l'installation de la rame, peuvent facilement être compensées.

Dans l'exemple illustré, pour chaque tapis 27 :
- la capacité de charge est d'environ 40kN, soit 106% de la charge nominale pour une rame de 30T ;
- la force de traction/freinage admissible est de 7kN ;
- la zone de roulement 34 fait 25 centimètres de large et 35 centimètres de long.

La masse inertielle 28 est montée en rotation sur l'arbre 30, rigidement reliée aux pignons 31, de sorte qu'elle tourne autour de l'axe X30 de cet arbre. Dans l'exemple illustré, le diamètre d'enroulement de la bande 4 sur son pignon 31 est d'environ 800 millimètres et la vitesse linéaire maximale de la rame 2 est de 10 mètres par secondes. Ainsi, la vitesse de rotation maximale de la masse inertielle 38 est d'environ 4 tours par seconde. La masse inertielle 28 permet d'accumuler ou de restituer une énergie qui simule l'inertie de la rame au démarrage ou au freinage.

La masse inertielle est disposée entre les tapis 27, c'est-à-dire très proche de ceux-ci. Ainsi, l'arbre 30 et les masses inertielles 28 constituent une transmission extrêmement rigide, synchronisant les deux roues 6 d'un même essieu 5. Leur forte inertie de flexion rend insignifiants les effets de flexion d'arbre. Ces éléments constituent le dispositif de synchronisation des essieux.

Dans l'exemple illustré, les masses inertielles ont sensiblement les caractéristiques suivantes :
- Masse : environ 2 500 kg
- Inertie : environ 1000 kg m2
- Diamètre extérieur : environ 1700 mm
- Diamètre des paliers : environ 200 mm
- Vitesse en périphérie pour une vitesse de métro de 10 m/s : 21 m/s

La masse inertielle est réalisée à partir d'un tube d'acier usiné (intérieur et extérieur) sur lequel des flasques, eux-mêmes usinés, sont rapportés par vissage. Elle est montée sur le châssis de l'unité de roulement par l'intermédiaire de roulements à rouleaux.

L'essieu arrière 5 de la voiture 4 à l'avant de la rame 2, et l'essieu avant 5 de la voiture 4 à l'arrière de la rame sont proches l'un de l'autre. Dans cet exemple, la distance D51 entre ces deux essieux est d'environ 3 mètres. On utilise une liaison mécanique entre les unités de roulement 8 correspondantes.

Les deux essieux 5 d'une même voiture 4 sont distants d'environ 10 mètres. Afin d'éliminer les risques liés à l'utilisation d'une liaison mécanique sur une telle distance, on utilise un arbre électrique pour synchroniser les unités de roulement 8 correspondantes entre elles, l'arbre électrique formant une liaison virtuelle entre les masses. Un tel arbre électrique comprend des codeurs équipant chaque unité de roulement. Un contrôle en boucle fermée est effectué, grâce aux capteurs de vitesse 15, par les moyens de pilotage de l'unité de commande 9, de façon à annuler en permanence la différence de vitesse entre les unités de roulement. On s'assure par ailleurs que les corrections commandées aux deux moteurs soient globalement d'énergie nulle. De cette façon, on reproduit un arbre mécanique raide et neutre énergétiquement, qui ne freine pas ni n'accélère le système.

Chaque arbre électrique utilise deux motoréducteurs 26, chacun étant monté sur une unité de roulement respective 8, à chaque extrémité de cet arbre électrique. Les moteurs 26 et variateurs utilisés sont de puissance limitée, en rapport avec les déséquilibres à corriger et non avec les puissances totales sur les essieux. Leur consommation électrique est faible, compatible avec le réseau de distribution basse tension 18, puisqu'un mécanisme de récupération d'énergie 28 est utilisé. Dans l'exemple illustré, chaque moteur 26 a une puissance de 75 kW chacun.

Le pilotage de l'arbre électrique est réalisé de façon à ce qu'il reproduise un organe de transmission « passif », c'est-à-dire que, globalement, il n'apporte ni ne retranche d'énergie au banc inertiel.

L'arbre électrique offre des possibilités étendues d'utilisation du banc, par l'introduction d'une consigne de couple pour :
- simuler une rame ayant une inertie un peu différente ;
- simuler une pente : et/ou,
- compenser des frottements internes au banc.

Des butoirs 36, 37 sont fixés sur la structure porteuse 7-7. Les butoirs sont prévus pour bloquer la rame longitudinalement. Le butoir avant 36 est fixe relativement à la structure porteuse. Le butoir arrière 37 est escamotable, de sorte qu'il peut s'effacer pour permettre les mouvements de la rame 2, lors de sa mise en place ou de son retrait du banc 1. Les manœuvres du butoir arrière 37 sont de préférence motorisées et commandées manuellement, par exemple en utilisant une boite à bouton. Des capteurs de position équipent le butoir arrière 37, de sorte que le lancement d'un essai n'est possible que si ce butoir est en place.

La fixation des butoirs 36, 37 sur la structure porteuse permet un bouclage mécanique des efforts de traction et évite ainsi de solliciter mécaniquement la dalle de la fosse et la dalle du bâtiment, autour de la fosse. Le guidage du train pour sa mise en place ou son retrait du banc, ainsi que son maintien latéral lors des essais est assuré par les rails de guidage latéraux 38.

Le banc 1 comprend en outre quatre simulateurs de présence d'un corps étranger. Ces simulateurs sont disposés sur la structure porteuse 7-7, de sorte que chacun soit en face d'une barre de détection de la rame testée. Lorsqu'un simulateur est activé, un vérin électrique applique une force de 65 N sur les barres de détection des rames. Lorsqu'il n'est pas activé, il est rétracté en dessous de la surface de roulement. La force exercée est mesurée grâce à une cellule de force. Un capteur de position ou des fins de courses électriques renseignent sur sa position.

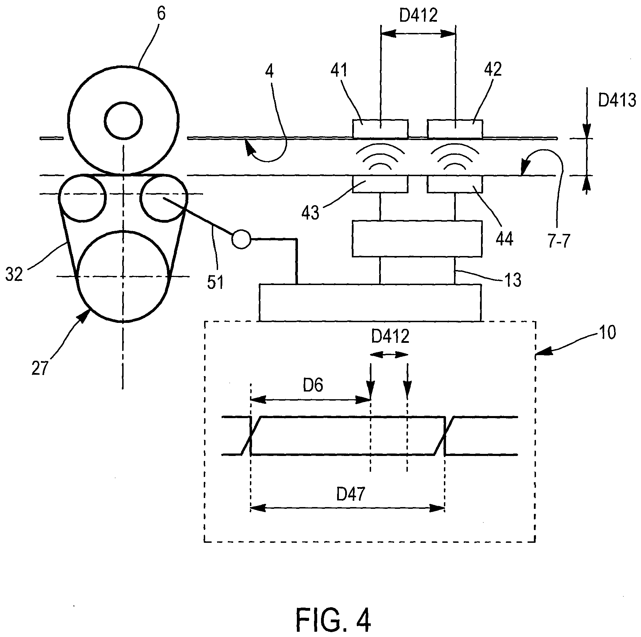

La figure 4 illustre schématiquement des moyens de communication 41-44 de la rame 2 avec son infrastructure système 10-13. La partie haute de la figure 4 représente la position de ces moyens de communication relativement à la rame. La partie basse de la figure 4 est une vue de détail de ces moyens de communication.

En exploitation, la rame communique via des antennes d'émission/réception 41, 42 qui lui sont propres, situées en partie basse de la rame 4, et communiquant par courant induit avec des boucles de courant disposées dans les voies normalement utilisées en exploitation. Le banc 1 comprend des antennes banc 43, 44 conçues pour simuler les boucles de la voie d'exploitation. Les antennes banc 43, 44 sont installées sur la structure porteuse 7-7, de sorte que chacune soit en face d'une antenne respective 41, 44 de la rame testée 2. Chaque antenne 41, 42 de la rame 2 se trouve au-dessus d'une antenne banc 43, 44 à une distance D413 sensiblement égale à la distance entre les antennes et les boucles sur une voie d'exploitation. Les antennes banc sont reliées à l'unité de commande 10 par la liaison antennes 13.

Les antennes 41-44 sont utilisées pour une liaison dite FS, où FS est l'acronyme de Fréquence de Sécurité. En exploitation, les boucles disposées à intervalle régulier dans la voie d'exploitation, permettent de recevoir une porteuse FS qui permet à la rame de s'asservir en vitesse sur la voie.

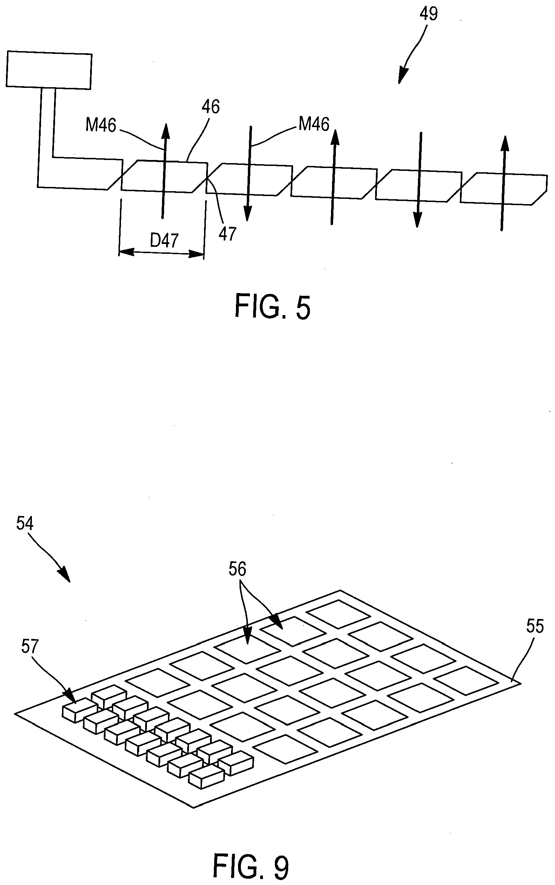

Comme illustré à figure 5, sur une voie d'exploitation, une antenne FS réelle 49 comprend une succession de boucles 46 qui se croisent à un intervalle défini D47. Chaque croisement 47 s'appelle un chevron 47. Chaque boucle 46 émet un champ magnétique qui s'inverse à chaque chevron.

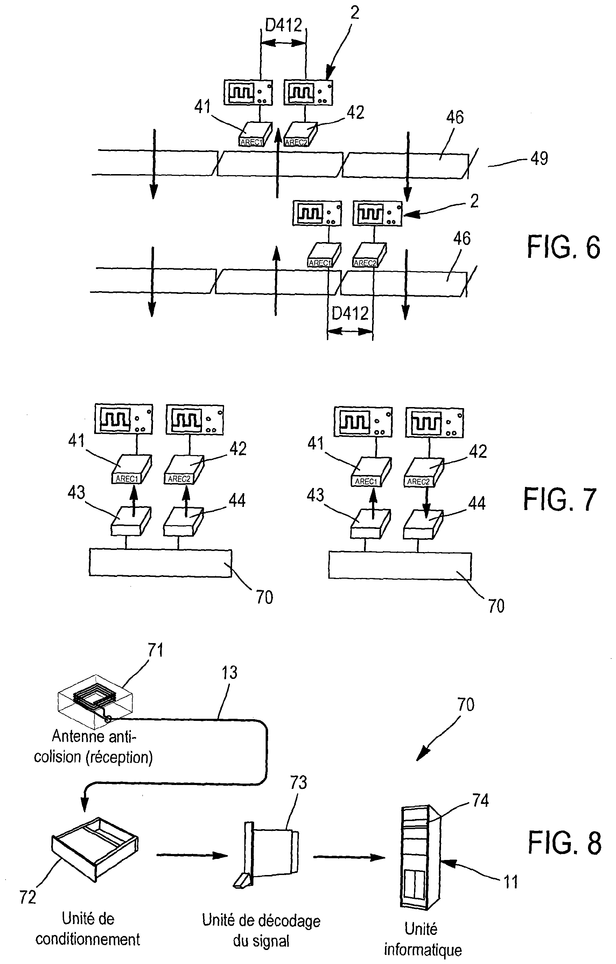

La figure 6 illustre le fonctionnement de la liaison FS sur une voie d'exploitation. La partie haute de la figure 6 illustre une première position de la rame 2 au regard de l'antenne 19, et, la partie basse de la figure 6 illustre une deuxième position de la rame 2 au regard de cette antenne.

La rame 2 dispose de deux antennes 41, 42 pour recevoir un signal FS. Ces antennes 41,42, respectivement connues sous les noms d'antenne AREC1 et AREC2, sont distantes l'une de l'autre d'une distance fixe D412. Lorsque ces deux antennes sont au-dessus d'une même boucle (partie haute de la figure 6), elles reçoivent un signal en phase. Lorsqu'elles ne sont pas au-dessus d'une même boucle (partie basse de la figure 6), elles reçoivent un signal en opposition de phase. C'est cette transition qui est constatée par la rame et qui permet la détection de chevrons.

La figure 7 illustre une simulation de la liaison FS par le banc 1. La partie gauche de la figure 7 illustre la simulation d'une première position de la rame 2 dans laquelle les antennes FS 41, 42 de la rame 2 sont au-dessus d'une même boucle, et, la partie droite de la figure 7 illustre la simulation d'une deuxième position de la rame 2 dans laquelle les antennes FS 41, 42 de la rame 2 ne sont pas au-dessus d'une même boucle.

Comme illustré à la figure 7, dans le banc 1, la liaison FS est simulée par deux antennes émettrices 43, 44 situées dans le banc, chacune sous une antenne 41, 42 respective de la rame. Les antennes émettrices sont pilotées par l'unité de commande 10 et peuvent générer un signal FS en phase (à gauche de la figure 7) ou en opposition de phase (à droite de la figure 7).

Comme illustré à la figure 8, Le banc comprend un générateur de signal 70 comprenant :
- un boîtier antenne 71 dans lequel est intégrée une bobine correctement dimensionnée pour induire le couplage magnétique permettant la transmission de l'information, c'est-à-dire le signal FS ;
- une unité de puissance 72 ;
- une unité de mise en forme et de traitement du signal 73 ; et,
- une unité informatique de contrôle 74.
L'unité de puissance 72, l'unité de mise en forme et de traitement du signal et l'unité informatique de contrôle 74 sont disposées dans la baie informatique 11 de l'unité de commande 10.

Une modulation du signal FS permet de transmettre des ordres à la rame. Cette modulation ainsi que le pilotage de la phase sont générés par l'unité de mise en forme et traitement du signal. Par ce moyen, la liaison FS assure la transmission de données de mise en mouvement de la rame, notamment l'ordre de démarrage et la vitesse. Une attention particulière est donc requise sur l'aspect sécurité de cette liaison. Cette liaison ne doit en aucun cas générer une porteuse sans transition de phase alors que la rame est en mouvement, ce qui engendrerait un risque d'accélération brutale de la rame. Afin de répondre à cet aspect sécuritaire, un capteur de vitesse 51 est installé sur l'un des tapis 27 afin de transmettre la vitesse de rotation. Cette vitesse est ensuite utilisée par une logique de modélisation et de simulation de la voie qui autorise la transition de phase, c'est-à-dire le passage d'un chevron seulement une fois la distance spécifiée « parcourue » par la rame sur la bande de roulement 32. A la figure 4, la distance D6 représente la distance parcourue par la rame depuis le dernier passage d'un chevron.

La rame possède en outre deux antennes émettrices anticollision qui cessent d'émettre dans certains cas liés à la sécurité. Lorsqu'une absence d'émission de ces antennes est détectée, elle entraîne l'arrêt de l'émission du signal FS.

Deux antennes de réception des signaux anticollision sont placées sous la rame en vis-à-vis des antennes anticollision. Ces antennes sont chacune constituées d'un boîtier dans lequel est intégrée une bobine dimensionnée pour induire un couplage magnétique permettant la transmission de l'information. Le signal réceptionné est ensuite conditionné puis démodulé. L'information est transmise au logiciel de pilotage.

La rame possède aussi des antennes de télémesure et de télécommande, dites antennes TM/TC. Une liaison TM/TC permet des échanges entre la rame et le l'unité de commande. La rame reçoit des signaux TC et répond par des signaux TM. La rame possède une antenne d'émission TM et réceptionne les signaux TC via ses antennes AREC 41, 42, prévues pour les signaux FS.

Pour simuler cette liaison TM/TC, une antenne de réception des signaux TM est placée sous la rame en vis-à-vis de l'antenne TM de la rame, et, une antenne d'émission des signaux TC est placée sous la rame en vis-vis d'une antenne AREC 41, 42.

De plus, une liaison rame/station, dite LSV/LVS, permet des échanges entre la rame et une station. La rame reçoit des signaux LSV et répond par des signaux LVS. La rame possède une antenne d'émission LVS et réceptionne les signaux LSV via ses antennes AREC 41, 42.

Pour simuler cette liaison, une antenne de réception des signaux LVS est placée sous la rame en vis-à-vis de l'antenne LVS, et, une antenne d'émission des signaux LSV est placée sous la rame en vis-vis d'une antenne AREC.

Une liaison phonie est aussi prévue entre la rame et le poste de contrôle commande, en exploitation, ou l'unité de commande 10 sur le banc 1. Cette liaison phonie permet un dialogue avec un opérateur situé dans la rame. Elle peut s'établir par deux moyens :
- sur demande du poste par envoi d'une information vers la rame via l'antenne TC ; ou,
- sur demande de la rame par envoi d'une information vers le poste de via l'antenne TM.
Lorsque la liaison phonie est établie entre le poste et la rame, l'échange phonique est opéré via une antenne phonie située sous la rame. Cette antenne fonctionne en émission et en réception.

Pour simuler la liaison phonie, un téléphone 52 est installé sur le bureau de l'unité de commande 10 et permet un dialogue avec la rame. Le signal émis ou reçu par le téléphone est conditionné via une ressource électronique installée dans la baie 11. Le signal conditionné 14 est ensuite transmis à une antenne phonie installée sous l'antenne phonie de la rame. Le logiciel de pilotage du banc 1 permet l'envoi d'une trame TC vers la rame afin de demander l'établissement de la liaison phonie. Le logiciel de pilotage informe l'opérateur en cas de détection d'une trame TM émise par la rame demandant l'établissement de la liaison phonie ; cette information peut être reportée de manière sonore et/ou visuelle.

Des plots métalliques sont généralement disposés dans les voies d'exploitation ; ils qui permettent à une rame de connaitre sa position sur la voie et de transmettre des informations. Un détecteur à courant de Foucault, constitué d'un pont d'inductances mutuelles qui se déséquilibrent en présence d'une pièce métallique à moins de 95 mm, est installé en partie basse de la rame. Les plots sont des pièces métalliques de longueurs et d'espacement variables installées sur la voie et qui sont détectées par ce détecteur et donnent au à la rame des informations, notamment une instruction de décélération ou une information de position à quai.

La figure 9 illustre un simulateur de plot 54. Le simulateur 54 comprend une plaque mécanique 55 qui porte de petits carrés 56 métalliques pouvant être isolés ou connectés électriquement. Dans l'exemple illustré, on utilise des relais 57 pour connecter ou déconnecter les carrés. Ces carrés peuvent par exemple être en aluminium ou en cuivre. Selon que les carrés sont isolés ou non électriquement les uns des autres, le détecteur de plot du train détecte ou non la présence d'un plot. Les relais 57 sont situés à proximité des carrés 56 qu'ils permettent d'isoler ou connecter électriquement et sont commandés par une unité de pilotage située dans baie 11. Afin de simuler la présence d'un plot d'une longueur donnée, on connecte l'ensemble des carrés pendant une durée qui est calculée en fonction de la vitesse du train. Cette séquence peut être répétée dans le temps pour simuler un couple de plots éloignés l'un de l'autre par une distance donnée, donc un temps donné. Le calcul de la durée de la simulation d'un plot est effectué par le logiciel de pilotage, grâce au capteur de vitesse 51.

En exploitation, la rame est alimentée en électricité par un frotteur 61 qui est en contact avec un rail d'alimentation. Sur le banc 1, la rame 2 est immobile. Le rail comprend un rail 62. Le rail 62 comprend un tronçon de rail 63 alimenté en électricité par un câble de puissance 64. Le rail comprend en outre deux tronçons en matière isolante 66 disposés de part et d'autre du tronçon alimenté 63. Le tronçon alimenté 63 est disposé dans le banc 1 de façon à ce que lorsque la rame 2 est en position d'être testée, le frotteur 61 repose sur lui.

Dans l'exemple illustré, le rail comprend en outre des moyens 67 pour entrainer le tronçon alimenté 63 selon un mouvement alternatif longitudinal. Ce mouvement permet au frotteur de ne pas coller au rail. Le tronçon alimenté 63 comprend en outre un radiateur passif pour évacuer la chaleur due au frottement du frotteur sur le rail.

Bien sûr, l'invention est définie par les revendications qui suivent.

Il apparaîtra en effet à l'homme de l'art que diverses modifications peuvent être apportées aux modes de réalisation décrits ci-dessus, à la lumière de l'enseignement qui vient de lui être divulgué.

Ainsi, un arbre électrique peut être utilisé pour la synchronisation de toutes les masses inertielles, quelle que soit la distance qui les sépare, petite ou grande.

Le banc peut en outre être prévu pour tester des rames comprenant une seule voiture ou plus de deux voitures. De même, il peut être prévu pour un plus ou moins grand nombre d'essieux.

Aussi, au lieu d'être réalisée à partir d'un tube et de flasques, la masse inertielle peut être réalisée par un procédé de fonderie.

Un banc selon l'invention est aisément adaptable à différents types de rame. Par exemple, une distance entre les unités de roulement peut être modifiée aisément, en fonction de la distance entre les essieux de la rame à tester.

## Revendications

1. Banc (1) prévu pour tester une rame (2), notamment une rame de métro automatique, ladite rame comprenant au moins une voiture (4), chaque voiture comprenant deux essieux, chaque essieu étant disposé au voisinage d'une extrémité respective de ladite voiture et chaque essieu portant deux roues (6), **caractérisé en ce qu'**il comprend :
- une unité de roulement (8) placée sous chaque essieu, prévue pour y faire rouler au moins une roue (6) de ladite rame (2), chaque unité (8) comprenant :
- une masse inertielle (28) rotative ;
- un moteur (26) en prise avec ladite masse inertielle ; et,
- un capteur (51) pour la vitesse de rotation de ladite masse ;
et,
- des moyens (11, 15) pour piloter chacun desdits moteurs (26) et pour synchroniser les unités de roulement entre elles en effectuant un contrôle en boucle fermée grâce aux capteurs de vitesse, de façon à annuler en permanence une différence de vitesse entre lesdites unités de roulement.

2. Banc selon la revendication 1, **caractérisé en ce que** les moyens de pilotage (11, 15) comprennent des moyens pour assurer que des corrections commandées aux deux moteurs sont globalement d'énergie nulle.

3. Banc selon la revendication 1, **caractérisé en ce que** moyens de pilotages (11, 15) sont adaptés pour fournir une consigne de couple pour :
- simuler une rame ayant une inertie différente ; et/ou,
- simuler une pente : et/ou,
- compenser des frottements internes au banc.

## Patentansprüche

1. Prüfstand (1) zum Prüfen eines Zuges (2), insbesondere einer automatischen U-Bahn, wobei der Zug mindestens einen Wagen (4) umfasst, jeder Wagen zwei Achsen hat, jede Achse in der Nähe eines jeweiligen Endes des Wagens angeordnet ist und jede Achse zwei Räder (6) trägt, **dadurch gekennzeichnet, dass** der Prüfstand umfasst:
- eine Lagereinheit (8), die unter jeder Achse angeordnet ist und vorgesehen ist, um zumindest ein Rad (6) des Zuges (2) auf ihr rollen zu lassen, wobei jede Einheit (8) umfasst:
- eine sich drehende Schwungmasse (28);
- einen Motor (26), der sich mit der Schwungmasse in Eingriff befindet; und
- einen Sensor (51) für die Drehzahl der Masse;
und
- Mittel (11, 15) zum Ansteuern jedes der Motoren (26) und zum Synchronisieren der Lagereinheiten miteinander, indem mit Hilfe der Drehzahlsensoren eine Regelung derart durchgeführt wird, dass eine Drehzahldifferenz zwischen den Lagereinheiten dauerhaft aufgehoben wird.

2. Prüfstand nach Anspruch 1, **dadurch gekennzeichnet, dass** die Mittel zum Ansteuern (11, 15) Mittel umfassen zur Sicherstellung, dass die an den beiden Motoren gesteuerten Korrekturen insgesamt einer Energie gleich Null entsprechen.

3. Prüfstand nach Anspruch 1, **dadurch gekennzeichnet, dass** die Mittel zum Ansteuern (11, 15) ausgebildet sind zum Liefern eines Drehmoment-Sollwerts, um:
- einen Zug mit unterschiedlicher Trägheit zu simulieren; und/oder
- eine Neigung zu simulieren; und/oder
- innere Reibungen auf dem Prüfstand zu kompensieren.

## Claims

1. Rig (1) for testing a train (2), especially an automatic underground train, said underground train comprising at least a car (4), each car comprising two axles, each axle being arranged in the vicinity of a respective end of the car and each axle carrying two wheels (6) **characterised in that** it comprises:
- a rolling unit (8) placed under each axle 5 to have at least one wheel (6) of the said train (2) rolling on it, each unit (8) comprising:
- a rotary inertial body (28);
- a motor (26) engaged with said inertial body; and,
- a sensor (51) for the rotation speed of said inertial body;
and
- means (11, 15) for controlling each one of said motors (26) and for synchronising the rolling units between them carrying out a control in a closed loop using the speed sensor 51 as to constantly cancel the difference in speed between said rolling units.

2. Rig according to claim 1, **characterised in that** the means for controlling (11, 15) comprise means for ensuring that the corrections ordered of the two motors are globally of zero energy.

3. Rig according to claim 1, **characterised in that** the means for controlling (11, 15) are adapted to provide a torque setting for:
- simulating a train that has a different inertia; and/or,
- simulating a slope: and/or,
- offsetting the friction internal to the rig.
